# EUROPÄISCHE PATENTSCHRIFT

(11) **EP 2 606 252 B1**
(45) Veröffentlichungstag und Bekanntmachung des Hinweises auf die Patenterteilung: **30.09.2015**
(21) Anmeldenummer: 11741403.7
(22) Anmeldetag: 09.06.2011
(51) Int. Cl.: F16D 55/00

(54) **BREMSENABDECKBLECH**
BRAKE COVER PLATE
TÔLE DE RECOUVREMENT DE FREIN

(30) Priorität: 19.06.2010 DE 102010024417
(43) Veröffentlichungstag der Anmeldung: 26.06.2013
(73) Patentinhaber: Volkswagen Aktiengesellschaft, 38436 Wolfsburg (DE)
(72) Erfinder: FRANTZ, Sven, 38518 Gifhorn (DE); KLOPP, Horst, 38550 Isenbüttel (DE)
(86) Internationale Anmeldenummer: PCT/EP2011/002833
(87) Internationale Veröffentlichungsnummer: WO 2011/157378

(56) Entgegenhaltungen:
- DE-A1- 3 824 917
- DE-A1- 19 751 915
- FR-A1- 2 782 359
- JP-A- 10 246 256
- JP-A- 2008 048 493

## Beschreibung

Die Erfindung bezieht sich auf eine Anordnung aus einem Radträger, einem Radlager und einem Bremsenabdeckblech für eine Kraftfahrzeug-Scheibenbremse nach dem Oberbegriff von Patentanspruch 1.

Bremsenabdeckbleche sind üblicherweise an der Fahrzeuginnenseite der Bremsscheiben angeordnet und schützen diese gegen Schmutz und Spritzwasser. Sie gewährleisten dadurch bei einer Betätigung der Bremse ein gutes Ansprechen und vermindern den Verschleiß an den Bremsscheiben und den Bremsbelägen. Zudem wird einem Nässe-Fading vorgebeugt. Neben der vorgenannten Schutzfunktion dienen Bremsenabdeckbleche ferner der Abschirmung der Komponenten einer Radaufhängung gegen die Einwirkung von Wärme, die bei einer starken Beanspruchung der Bremse entsteht.

Bremsenabdeckbleche sind beispielsweise aus DE 28 14 252 A1, DE 103 36 798 A1 und DE 10 2004 044 514 A1 bekannt. Zur Befestigung an einem Radträger kann an dem Bremsenabdeckblech ein zentraler Befestigungsflansch vorgesehen sein, der, wie in DE 28 14 252 A1 offenbart, mit dem Radträger verschraubt wird. Eine solche Befestigung ist jedoch bisweilen nicht ausreichend stabil. Zudem kann das Bremsenabdeckblech zu unerwünschten Schwingungen angeregt werden. In DE 103 36 798 A1 wird daher vorgeschlagen, das Bremsenabdeckblech mit Presssitz an einem zentralen Ansatz des Radträgers oder einem an diesem vorgesehenen Achszapfen zu befestigen.

Mit herkömmlichen Bremsenabdeckblechen werden üblicherweise lediglich die Bremsscheibe und die Bremsbeläge gegen Schmutz und Spritzwasser geschützt. Gleichwohl lässt sich nicht ausschließen, dass trotz eines Bremsenabdeckblechs das Radlager mit Schmutz beaufschlagt wird. Radlager weisen aus diesem Grunde zumeist eine abgedichtete Wälzlageranordnung auf, der, wie beispielsweise in DE 10 2007 010 290 A1 und DE 10 2007 040 581 A1 beschrieben, zusätzlich eine Vordichtung vorgelagert sein kann. In DE 10 2007 010 290 A1 ist diese Vordichtung als vor dem Radlager angebrachter Dichtring ausgebildet, der eigens montiert werden muss. Auch in DE 10 2007 040 581 A1 wird die Vordichtung durch einen eigens herzustellenden und zu montierenden Ringkörper geschaffen, der zwischen einem Innenring der Wälzlageranordnung und einer Schulter des Radträgers klemmend gehalten ist.

Ein Bremsenabdeckblech für eine Kraftfahrzeug-Scheibenbremse nach dem Oberbegriff von Patentanspruch 1 ist aus JP 2008-048493 A bekannt. Dieses Bremsenabdeckblech ist mit einem Innenrand seines Befestigungsflansches an einem Radträger festgelegt und zur Bremsscheibe hin umgebogen, so dass ein Radialspalt zwischen dem Radträger und einer Radnabe überlappt wird. Allerdings bildet hier bereits der Radialspalt zwischen dem Radträger und der Radnabe eine Vordichtung für das zwischen diesen angeordnete Wälzlager.

Vor diesem Hintergrund liegt der Erfindung die Aufgabe zu Grunde, den Herstellungs- und Montageaufwand für eine Radlagervordichtung vermindern.

Diese Aufgabe wird durch eine Anordnung aus einem Radträger, einem Radlager und einem Bremsenabdeckblech gemäß Patentanspruch 1 gelöst.

Durch die Integration der Radlagervordichtung in das Bremsenabdeckblech werden Herstellung und Montage eines separaten Bauteils eingespart und entsprechender Aufwand vermieden. Das erfindungsgemäße Bremsenabdeckblech ist darüber hinaus einfach und kostengünstig montierbar.

Vorteilhafte Ausgestaltungen der Erfindung sind in weiteren Patentansprüchen angegeben.

So kann beispielsweise die ringförmige Erhebung an dem Bremsenabdeckblech derart ausgestaltet sein, dass diese axial weiter in Richtung Bremsscheibe vorspringt als der Befestigungsflansch. Hierdurch lässt sich ohne großen Aufwand der eigentlichen Dichtung der Wälzlageranordnung ein Labyrinth vorschalten, welches den Zweck einer Vordichtung, nämlich den Schutz der Lagerdichtung vor Schmutzbeaufschlagung hinreichend erfüllt.

Vorzugsweise ist der Befestigungsflansch des Bremsenabdeckblechs zur Festlegung desselben auf einen Radträger oder dergleichen aufpressbar. Dies gestattet eine einfache und kostengünstige Montage verbunden mit einer hohen Stabilität der Halterung. Insbesondere ergibt sich hierdurch eine steife Struktur, so dass eine störende Schwingungsanregung des Bremsenabdeckblechs vermieden wird, indem die erste Eigenfrequenz zu einer höheren Frequenz hin verschoben wird.

Gemäß einer weiteren vorteilhaften Ausgestaltung der Erfindung ist die ringförmige Erhebung durch einen an dem Bremsenabdeckblech ausgeformten Ringvorsprung gebildet, dessen radial außenseitige Flanke in einen Abschnitt zur Abdeckung der Bremsscheibe bzw. den tellerartigen Abschnitt übergeht und dessen radial innenseitige Flanke in denen Befestigungsflansch übergeht. Das Bremsenabdeckblech lässt sich so einstückig als Blechformteil aus einer Blechronde herstellen. Für die Radlagervordichtung ist, abgesehen von einer entsprechenden Anpassung des Formwerkzeugs, kein zusätzlicher Aufwand erforderlich.

Das vorstehend erläuterte Bremsenabdeckblech kommt vorzugsweise bei einer Anordnung aus dem Radträger und dem Radlager zum Einsatz, und zwar derart, dass die ringförmige Erhebung des Bremsenabdeckblechs einen Endabschnitt des Radlagers radial überlappt. Dies ermöglicht eine Vordichtung für das Radlager, die einen hinreichenden Schutz gegen Schmutzbeaufschlagung bietet. Hierdurch wird die Lebensdauer des Radlagers verbessert.

Das Radlager umfasst eine Radnabe, die über eine Wälzlageranordnung drehbar gelagert ist. Die Wälzlageranordnung weist zur Seite des Radträgers hin eine Lagerdichtung auf, welche zu dem Befestigungsabschnitt der Bremsscheibe zeigt. Zwischen Lagerdichtung und Befestigungsabschnitt sowie ringförmiger Erhebung und radialer Außenseite des Radlagers wird hierdurch eine umlaufende Labyrinthdichtung als Radlagervordichtung gebildet, die ein im Wesentlichen L-förmiges Profil aufweist und das Vordringen von Schmutzpartikeln verhindert.

Gemäß einer weiteren vorteilhaften Ausgestaltung der Erfindung weist die Lagerdichtung einen radial über die Radnabe hinausstehenden Steg auf, der in die Radlagervordichtung hineinragt. Hierdurch wird das Vordringen von Schmutzpartikeln zu der eigentlichen Lagerdichtung weiter erschwert.

Das Bremsenabdeckblech kann prinzipiell klemmend zwischen einem Innenring der Wälzlageranordnung und dem Radträger festgelegt sein. Gemäß einer vorteilhaften Ausgestaltung ist der Befestigungsabschnitt des Bremsenabdeckblechs jedoch mit einem Innenrand auf einen Abschnitt des Radträgers aufgepresst, so dass sich eine Anbindung mit hoher Steifigkeit ergibt.

Nachfolgend wird die Erfindung anhand eines in der Zeichnung dargestellten Ausführungsbeispiels näher erläutert. Die Zeichnung zeigt in:
Fig. 1 eine räumliche Ansicht einer Anordnung bestehend aus einem Radträger, einem Radlager und einem Bremsenabdeckblech nach der Erfindung,
Fig. 2 eine Ansicht der Anordnung aus Fig. 1 ohne Radlager,
Fig. 3 eine Schnittansicht der Anordnung aus Fig. 1, und in
Fig. 4 eine Detailansicht der in das Bremsenabdeckblech integrierten Radlagervordichtung.

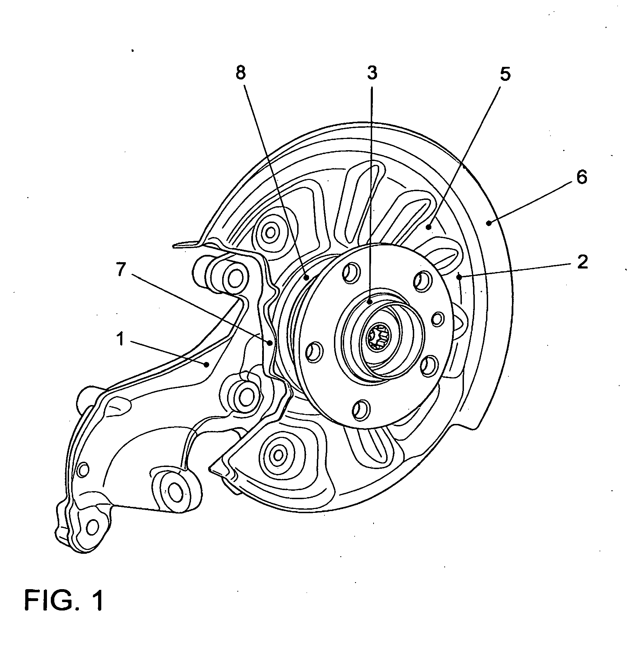

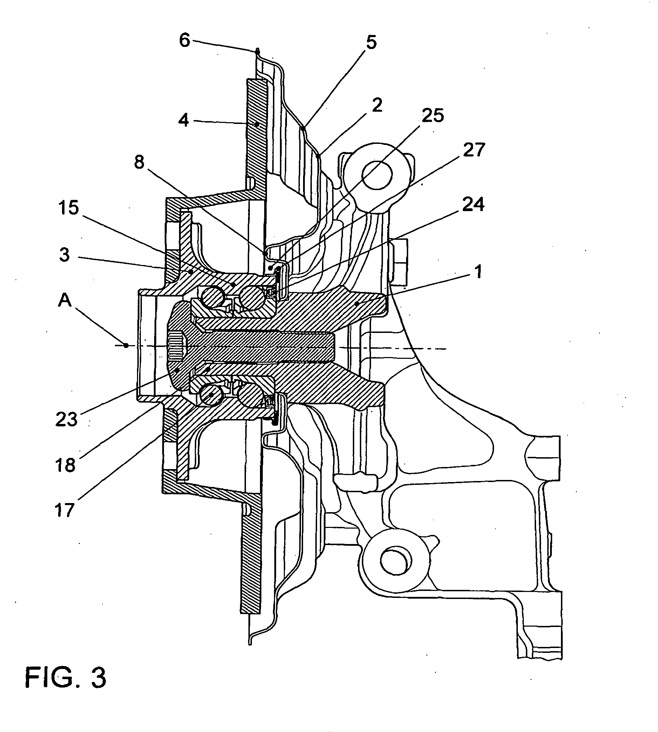

Das in den Fig. 1 bis 4 dargestellte Ausführungsbeispiel zeigt einen Radträger 1 einer Kraftfahrzeughinterachse, an dem ein Bremsenabdeckblech 2 befestigt ist. An dem Radträger 1 ist ferner ein Radlager 3 für einen Fahrzeugrad vorgesehen. Weiterhin ist an dem Radlager 3 eine Bremsscheibe 4 einer sonst nicht näher dargestellten Scheibenbremse befestigt.

Das Bremsenabdeckblech 2 ist als beschnittenes Blechumformteil einstückig aus einer Blechronde hergestellt und deckt die Bremsscheibe 4 mit einem tellerartigen Abschnitt 5 zum Fahrzeug hin ab. Dabei erstreckt sich ein Außenrand 6 des tellerartigen Abschnitts 5 radial über die Bremsscheibe 4. Ferner ist an dem Bremsenabdeckblech 2 eine Ausnehmung oder Aushöhlung 7 für einen Bremssattel ausgebildet.

An den tellerartigen Abschnitt 5 des Bremsenabdeckblechs 2 angrenzend ist in einem Bereich um das Radlager 3 herum an der zur Bremsscheibe 4 weisenden Seite eine ringförmige Erhebung 8 an dem Bremsenabdeckblech 2 ausgebildet, die als Radlagervordichtung dient. Diese ringförmige Erhebung 8 verläuft konzentrisch um die Radachse A. Sie wird durch einen an dem Bremsenabdeckblech 2 ausgeformten Ringvorsprung gebildet, der radial vom Außenrand 6 des Bremsenabdeckblechs 2 beabstandet ist. Der tellerartigen Abschnitt 5 geht dabei über eine weiche Krümmung in eine radial außenseitige Flanke 9 der ringförmigen Erhebung 8 über. An eine radial innenseitige Flanke 10 des Ringvorsprungs bzw. der ringförmigen Erhebung 8 schließt radial innenseitig ein Befestigungsflansch 11 an. Letzterer ist ebenfalls einstückig in das Bremsenabdeckblech 2 integriert. Die ringförmige Erhebung 8 springt dabei axial weiter in Richtung Bremsscheibe 4 vor als der Befestigungsflansch 11, der gegenüber der Erhebung 8 zurückgesetzt ist.

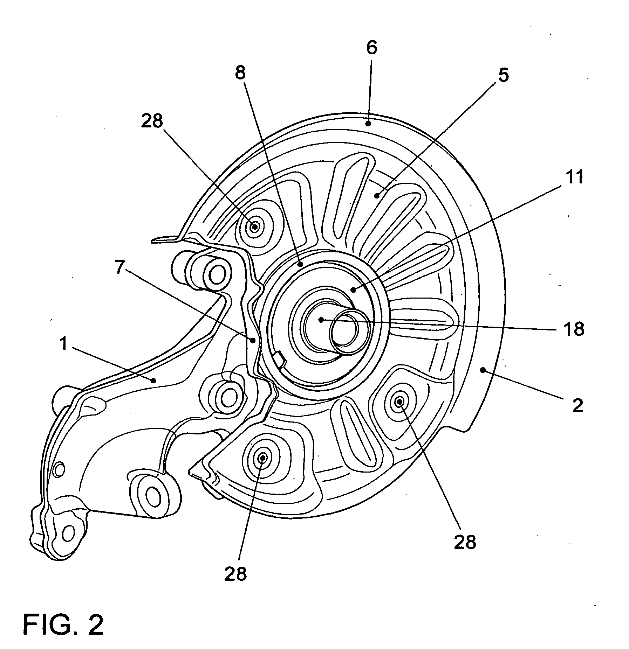

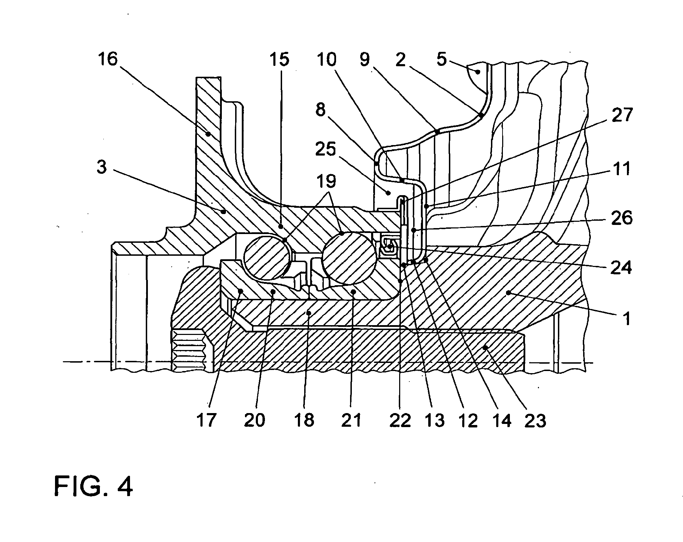

Der sich radial innerhalb der ringförmigen Erhebung 8 erstreckende Befestigungsflansch 11 dient zur Festlegung des Bremsenabdeckblechs 2 an dem Radträger 1. Bei dem dargestellten Ausführungsbeispiel ist das Bremsenabdeckblech 2 auf den Radträger 1 aufgepresst. Der Befestigungsflansch 11 sitzt hierzu mit seinem Innenrand 12 auf einem Absatz 13 des Radträgers 1, wie dies in Fig. 4 gezeigt ist. Der Absatz 13 ist dabei konzentrisch zur Radachse A. Dabei liegt der Befestigungsflansch 11 axial gegen eine an dem Radträger 1 ausgebildete Schulter 14 an. Zur Verbesserung des Presssitzes kann der Innenrand 12 des Befestigungsflanschs 11 zum Radlager 3 hin ausgestellt sein, so dass ein umlaufender Kragen gebildet wird, um die Abstützlänge in Axialrichtung zu vergrößern. Darüber hinaus kann das Bremsenabdeckblech 2 zusätzlich an einer oder mehreren Stellen mit dem Radträger 1 verschraubt sein. Die Figuren 1 und 2 zeigen dazu jeweils drei im Bereich des tellerartigen Abschnitts 5 angeordnete Befestigungsöffnungen 28 radial außerhalb der ringförmigen Erhebung 8.

Durch das vorstehend erläuterte Bremsenabdeckblech 2 und insbesondere die ringförmige Erhebung 8 desselben wird eine Radlagervordichtung für das Radlager 3 geschaffen. Letzteres umfasst eine Radnabe 15 mit einem Radflansch 16, an dem die Bremsscheibe 4 sowie ein nicht näher dargestelltes Fahrzeugrad befestigt werden. Das Radlager 3 umfasst weiterhin eine Wälzlageranordnung 17, über die die Radnabe 15 drehbar an einem Achszapfen 18 des Radträgers 1 gelagert ist. Der Achszapfen 18 kann dabei unmittelbar an den Radträger 1 angeformt oder aber an diesem befestigt sein. Bei dem dargestellten Ausführungsbeispiel umfasst die Wälzlageranordnung 17 zwei Schrägkugellager in X-Anordnung, wobei die außenseitigen Laufflächen 19 in der Radnabe 15 ausgebildet sind. Innenseitige Laufflächen befinden sich an zwei Lagerinnenringen 20 und 21, die auf den Achszapfen 18 in Reihe aufgeschoben und an einer an dem Radträger 1 ausgebildeten Anlageschulter 22 axial abgestützt sind. Zum Verspannen dient ein zentraler Bolzen 23, der in den Radträger 1 eingeschraubt oder alternativ zu der Darstellung in Fig. 4 durch den Radträger 1 hindurchgeführt und mittels einer Mutter verschraubt ist.

Die Wälzlageranordnung 17 umfasst an ihrer zu dem Radträger 1 weisenden Seite eine Lagerdichtung 24. Dieser Lagerdichtung 24 ist die durch das Bremsenabdeckblech 2 geschaffene Radlagervordichtung vorgeschaltet, wodurch die Schmutzbeaufschlagung der Lagerdichtung 24 stark vermindert und damit die Lebensdauer des Radlagers und insbesondere der Wälzlageranordnung 17 erhöht wird.

Wie insbesondere Fig. 4 entnommen werden kann, überlappt die ringförmige Erhebung 8 des Bremsenabdeckblechs 2 einen radträgerseitigen Endabschnitt des Radlagers 3 bzw. der Radnabe 15 radial, so dass zwischen der innenseitigen Flanke 10 der ringförmigen Erhebung 8 und dem Außenumfang des radträgerseitigen Endabschnitts der Radnabe 15 ein Ringspalt 25 gebildet wird. Gleichzeitig ist das axiale Stirnende der Radnabe 15 und der Wälzlageranordnung 17 von dem Befestigungsflansch 11 des Bremsenabdeckblechs 2 axial durch einen Spalt 26 beanstandet. Beide Spalte 25 und 26 bilden ein um die Radachse A umlaufendes, im Profil L-förmiges Labyrinth als Radlagervordichtung.

Die Lagerdichtung 24 weist innerhalb der Radlagervordichtung einen radial über die Radnabe 15 hinausstehenden, umlaufenden Steg 27 auf, wodurch die Labyrinthwirkung weiter verstärkt wird. Der Steg 27 kann durch einen Lagerdeckel gebildet werden.

In Abwandlung des dargestellten Ausführungsbeispiels kann das Bremsenabdeckblech 2 auch klemmend zwischen der Wälzlageranordnung 17 und der Anlageschulter 22 des Radträgers 1 festgelegt sein.

Durch die Integration der Radlagervordichtung in das Bremsenabdeckblech 2 können herkömmliche Vordichtungselemente entfallen, wodurch der Montageaufwand einer solchen Vordichtung verringert wird. Da sich die ringförmige Erhebung 8 ohne weiteres bei der Formgebung eines Bremsenabdeckblechs 2 realisieren lässt, entsteht im Vergleich zur Herstellung herkömmlicher Bremsenabdeckbleche 2 ohne Radlagervordichtung kein Mehraufwand.

Durch das Aufpressen des Bremsenabdeckblechs 2 auf den Radträger 1 wird eine hohe Steifigkeit der so gebildeten Struktur erzielt. Zudem werden störende Schwingungsanregungen des Bremsenabdeckblechs 2 vermieden.

Die Erfindung wurde vorstehend anhand eines Ausführungsbeispiels sowie verschiedener Abwandlungen näher erläutert. Sie ist jedoch nicht darauf beschränkt, sondern umfasst alle durch die Patentansprüche definierten Ausgestaltungen.

### Bezugszeichenliste

- 1: Radträger
- 2: Bremsenabdeckblech
- 3: Radlager
- 4: Bremsscheibe
- 5: tellerartiger Abschnitt
- 6: Außenrand
- 7: Ausnehmung
- 8: ringförmiger Abschnitt
- 9: außenseitige Flanke
- 10: innenseitige Flanke
- 11: Befestigungsflansch
- 12: Innenrand
- 13: Absatz
- 14: Schulter
- 15: Radnabe
- 16: Radflansch
- 17: Wälzlageranordnung
- 18: Achszapfen
- 19: Lauffläche
- 20: Lagerinnenring
- 21: Lagerinnenring
- 22: Anlageschulter
- 23: Bolzen
- 24: Lagerdichtung
- 25: Ringspalt
- 26: Spalt
- 27: Steg
- 28: Befestigungsöffnung

## Patentansprüche

1. Anordnung aus einem Radträger (1), einem Radlager (3), das eine Radnabe (15) aufweist, die über eine Wälzlageranordnung (17) drehbar an dem Radträger (1) gelagert ist, wobei die Wälzlageranordnung (17) zur Seite des Radträgers (1) hin eine Lagerdichtung (24) aufweist,
und einem Bremsenabdeckblech (2) für eine Kraftfahrzeug-Scheibenbremse umfassend:
einen tellerartigen Abschnitt (5) zur Abdeckung einer Bremsscheibe, und
eine ringförmige Erhebung (8) als Radlagervordichtung, die an einer zur Bremsscheibe weisenden Seite vom Außenrand (6) des Bremsenabdeckblechs (2) beabstandet ausgebildet ist,
**dadurch gekennzeichnet, dass**
die ringförmige Erhebung (8) eine radial innenseitige Flanke (10) aufweist, die in einen Befestigungsflansch (11) zur Festlegung des Bremsenabdeckblechs (2) an dem Radträger (1) übergeht, der radial innerhalb der ringförmigen Erhebung (8) an dem Bremsenabdeckblech (2) ausgebildet ist,
wobei zwischen der innenseitigen Flanke (10) und dem Außenumfang des radträgerseitigen Endabschnitts der Radnabe (15) ein Ringspalt 25 gebildet wird, und ein Spalt 26 das axiale Stirnende der Radnabe (15) und der Wälzlageranordnung (17) von dem Befestigungsflansch (11) axial beabstandet,
wobei der Spalt (25) und der Spalt (26) ein um eine Radachse (A) umlaufendes, im Profil L-förmiges Labyrinth als Radlagervordichtung bilden.

2. Anordnung nach Anspruch 1, **dadurch gekennzeichnet, dass** die ringförmige Erhebung (8) axial weiter in Richtung Bremsscheibe vorspringt als der Befestigungsflansch (11).

3. Anordnung nach Anspruch 1 oder 2, **dadurch gekennzeichnet, dass** zur Festlegung des Bremsenabdeckblechs (2) der Befestigungsflansch (11) auf einen Radträger oder dergleichen aufpressbar ist.

4. Anordnung nach einem der Ansprüche 1 bis 3, **dadurch gekennzeichnet, dass** die ringförmige Erhebung (8) durch einen an dem Bremsenabdeckblech (2) ausgeformten Ringvorsprung gebildet ist, dessen radial außenseitige Flanke (9) in einen Abschnitt zur Abdeckung der Bremsscheibe übergeht.

5. Anordnung nach einem der vorherigen Ansprüche, **dadurch gekennzeichnet, dass** die ringförmige Erhebung (8) des Bremsenabdeckblechs (2) einen Endabschnitt des Radlagers (3) radial überlappt.

6. Anordnung nach einem der vorherigen Ansprüche, **dadurch gekennzeichnet, dass** die Lagerdichtung (24) innerhalb der Radlagervordichtung einen radial über die Radnabe (15) hinausstehenden Steg (27) aufweist.

7. Anordnung nach einem der vorherigen Ansprüche, **dadurch gekennzeichnet, dass** der Befestigungsflansch (11) einen Innenrand (12) aufweist und mit diesem auf einen Abschnitt des Radträgers (1) aufgepresst ist.

## Claims

1. Arrangement comprising a wheel support (1), a wheel bearing (3) which has a wheel hub (15) which is mounted rotatably on the wheel support (1) via an anti-friction bearing arrangement (17), the anti-friction bearing arrangement (17) having a bearing seal (24) towards the side of the wheel support (1), and a brake covering plate (2) for a motor vehicle disc brake comprising: a dish-like section (5) for covering a brake disc, and an annular elevation (8) as a wheel bearing preliminary seal which is configured on a side which points towards the brake disc such that it is spaced apart from the outer edge (6) of the brake covering plate (2), **characterized in that** the annular elevation (8) has a radially inner-side flank (10) which merges into a fastening flange (11) for fixing the brake covering plate (2) on the wheel support (1), which fastening flange (11) is configured on the brake covering plate (2) radially within the annular elevation (8), an annular gap (25) being formed between the inner-side flank (10) and the outer circumference of the wheel support-side end section of the wheel hub (15), and a gap (26) spacing the axial front end of the wheel hub (15) and the anti-friction bearing arrangement (17) apart axially from the fastening flange (11), the gap (25) and the gap (26) forming a labyrinth of L-shaped profile which runs around a wheel axis (A) as a wheel bearing preliminary seal.

2. Arrangement according to Claim 1, **characterized in that** the annular elevation (8) projects further axially in the direction of the brake disc than the fastening flange (11).

3. Arrangement according to Claim 1 or 2, **characterized in that** the fastening flange (11) can be pressed onto a wheel support or the like in order to fix the brake covering plate (2).

4. Arrangement according to one of Claims 1 to 3, **characterized in that** the annular elevation (8) is formed by an annular projection which is shaped on the brake covering plate (2) and the radially outer-side flank (9) of which merges into a section for covering the brake disc.

5. Arrangement according to one of the preceding claims, **characterized in that** the annular elevation (8) of the brake covering plate (2) overlaps an end section of the wheel bearing (3) radially.

6. Arrangement according to one of the preceding claims, **characterized in that**, within the wheel bearing preliminary seal, the bearing seal (24) has a web (27) which protrudes radially beyond the wheel hub (15).

7. Arrangement according to one of the preceding claims, **characterized in that** the fastening flange (11) has an inner edge (12) and is pressed with the latter onto a section of the wheel support (1).

## Revendications

1. Agencement constitué d'un support de roue (1), d'un palier de roue (3) qui présente un moyeu de roue (15) qui est supporté de manière rotative sur le support de roue (1) par le biais d'un agencement de palier à roulement (17), l'agencement de palier à roulement (17) présentant du côté du support de roue (1) un joint de palier (24),
et d'une tôle de recouvrement de frein (2) pour un frein à disque de véhicule automobile, comprenant
une portion de type plateau (5) pour recouvrir le disque de frein, et
un rehaussement annulaire (8) sous forme de joint de préétanchéité de palier de roue qui est réalisé de manière espacée du bord extérieur (6) de la tôle de recouvrement de frein (2) au niveau d'un côté tourné vers le disque de frein,
**caractérisé en ce que**
le rehaussement annulaire (8) présente un flanc du côté radialement interne (10) qui se prolonge dans une bride de fixation (11) pour fixer la tôle de recouvrement de frein (2) au niveau du support de roue (1) qui est réalisée radialement à l'intérieur du rehaussement annulaire (8) sur la tôle de recouvrement de frein (2),
un interstice annulaire (25) étant formé entre le flanc du côté interne (10) et la périphérie extérieure de la portion d'extrémité du moyeu de roue (15) du côté du support de roue, et un interstice (26) espaçant axialement l'extrémité frontale axiale du moyeu de roue (15) et l'agencement de palier à roulement (17) de la bride de fixation (11),
l'interstice (25) et l'interstice (26) formant en tant que joint de préétanchéité de palier radial un labyrinthe de profil en forme de L entourant un essieu de roue (A).

2. Agencement selon la revendication 1, **caractérisé en ce que** le rehaussement annulaire (8) fait saillie plus loin axialement dans la direction du disque de frein que la bride de fixation (11).

3. Agencement selon la revendication 1 ou 2, **caractérisé en ce que** pour la fixation de la tôle de recouvrement de frein (2), la bride de fixation (11) peut être pressée sur un support de roue ou similaire.

4. Agencement selon l'une quelconque des revendications 1 à 3, **caractérisé en ce que** le rehaussement annulaire (8) est formé par une saillie annulaire formée au niveau de la tôle de recouvrement de frein (2), dont le flanc du côté radialement externe (9) se prolonge dans une portion destinée à recouvrir le disque de frein.

5. Agencement selon l'une quelconque des revendications précédentes, **caractérisé en ce que** le rehaussement annulaire (8) de la tôle de recouvrement de frein (2) chevauche radialement une portion d'extrémité du palier de roue (3).

6. Agencement selon l'une quelconque des revendications précédentes, **caractérisé en ce que** le joint de palier (24) présente à l'intérieur du joint de préétanchéité de palier de roue une nervure (27) faisant saillie radialement au-delà du moyeu de roue (15).

7. Agencement selon l'une quelconque des revendications précédentes, **caractérisé en ce que** la bride de fixation (11) présente un bord interne (12) et est pressée avec celui-ci contre une portion du support de roue (1).
